# EUROPÄISCHE PATENTSCHRIFT

(11) **EP 3 644 402 B1**
(45) Veröffentlichungstag und Bekanntmachung des Hinweises auf die Patenterteilung: **07.04.2021**
(21) Anmeldenummer: 19203510.3
(22) Anmeldetag: 16.10.2019
(51) Int. Cl.: H01M 2/12, F16K 24/00, A62C 3/16, F16K 17/00, F16K 17/38, F16K 24/04, A62C 2/06

(54) **BATTERIEGEHÄUSE UMFASSEND EIN VENTIL ZUM DRUCKAUSGLEICH UND/ODER DRUCKÜBERLASTABBAU**
BATTERY HOUSING COMPRISING A VALVE FOR PRESSURE COMPENSATION AND/OR DISSIPATION
BOITIER DE BATTERIE COMPRENANT UNE SOUPAPE DE COMPENSATION DE PRESSION ET/OU DE RÉDUCTION DE SURPRESSION

(30) Priorität: 25.10.2018 DE 102018126600; 23.01.2019 DE 102019101586; 01.02.2019 DE 102019102547
(43) Veröffentlichungstag der Anmeldung: 29.04.2020
(73) Patentinhaber: tmax Holding GmbH, 68169 Mannheim (DE)
(72) Erfinder: Baum, Armin, 64668 Rimbach (DE)
(74) Vertreter: Wesch, Arno

(56) Entgegenhaltungen:
- EP-A1- 3 493 293
- DE-A1- 10 113 371
- DE-A1-102012 222 870
- US-A- 4 648 418

## Beschreibung

Die Erfindung betrifft ein Batteriegehäuse, umfassend ein Ventil zum Druckausgleich und/oder Drucküberlastabbau nach dem Oberbegriff des Patentanspruchs 1.

Aus der DE 101 13 371 A1 ist ein Brandschutzventil für eine Rohrleitung bekannt geworden. Die US 4,648,418 A offenbart ein Ventil mit einer Scheibe, die mit einem intumeszierenden Material beschichtet ist. Aus der EP 3 493 293 A1 ist eine Isolierverkleidung für Batteriegehäuse bekannt geworden, die intumeszierendes Material aufweist. Die DE 10 2012 222 870 A1 offenbart ein Gehäuse für Batterien mit einem Sicherheitsventil für eine Notentgasung bei einem fehlerhaften Betriebszustand eines Energiespeichers.

In Fahrzeugen werden zunehmend Batterien eingesetzt, um die Fahrzeuge elektrisch zu betreiben. Die Batterien werden in möglichst wärmeresistenten oder feuerresistenten Batteriegehäusen aufgenommen, um diese beispielsweise im Fall eines von außen auf das Batteriegehäuse einwirkenden Feuers oder von außen einwirkender Wärme vor einer Entzündung zu schützen bzw. eine Brandausbreitung von innen nach außen zu verhindern. Aufgrund chemischer, elektrischer und/ oder mechanischer Vorgänge können aber auch hohe Drücke im Inneren eines Batteriegehäuses entstehen.

Vor diesem Hintergrund ist aus der DE 10 2012 211 827 A1 ein Überdruckventil bekannt geworden, welches eine Öffnung in einem Batteriegehäuse freigeben kann. Das Überdruckventil weist ein Verschlusselement auf, welches rotatorisch nach Art einer Klappe bewegbar ist. Das klappenartige Verschlusselement ragt im geöffneten Zustand relativ weit vom Batteriegehäuse nach außen ab, so dass dieses einen erheblichen Bauraum benötigt. Wenn in diesen Bauraum andere Bauteile gelangen, können diese das Verschlusselement so behindern, dass ein Druckabbau nicht mehr in ausreichendem Maße sichergestellt werden kann.

Dem Verschlusselement ist auch ein Druckausgleichselement in Form einer permeablen oder semipermeablen Membran zugeordnet, die luftdurchlässig ist und einen Druckausgleich zwischen dem Inneren des Batteriegehäuses und der umgebenden Atmosphäre herstellt.

Im Brandfall jedoch kann das Innere eines solchen Batteriegehäuses geschädigt werden, wenn Flammen aus der Atmosphäre kommend in das Innere des Batteriegehäuses gelangen.

Des Weiteren kann ein Brand, der innerhalb des Batteriegehäuses entsteht, die Umgebung schädigen, wenn nämlich Flammen aus dem Inneren des Batteriegehäuses in die Atmosphäre gelangen. Die Umgebung kann auch geschädigt werden, wenn gesundheitsgefährdende Gase in die Umgebung gelangen.

Der Erfindung liegt vor diesem Hintergrund die Aufgabe zugrunde, ein Batteriegehäuse, umfassend ein Ventil zum Druckausgleich und/oder Drucküberlastabbau anzugeben, wobei das Ventil bei kompaktem Aufbau erlaubt, einen Überdruck im Batteriegehäuse effektiv und zuverlässig abzubauen und welches im Brandfall sowohl die Umgebung als auch das Innere des Batteriegehäuses effektiv vor Feuer schützt.

Die vorliegende Erfindung löst die genannte Aufgabe durch die Merkmale des Patentanspruchs 1.

Erfindungsgemäß ist zunächst erkannt worden, dass mindestens ein Teilventil, welches thermisch aktivierbar ist, eine druckausgleichende und/ oder druckabbauende Fluidleitung zwischen einem ersten Abschnitt und einem zweiten Abschnitt im Brandfall feuerfest absperren sollte. Weiter ist erkannt worden, dass eine solche Fluidleitung zuverlässig durch eine intumeszierende Dichtung verschlossen werden kann. Erfindungsgemäß ist so ein kompaktes Ventil zum Druckausgleich und/ oder Drucküberlastabbau angegeben, welches im Normalbetrieb, also insbesondere nicht im Brandfall, Überdrücke abbauen kann, aber im Brandfall keine Schwachstelle darstellt, die Flammen passieren können. Die Umgebung wird des Weiteren nicht geschädigt, weil auch gesundheitsgefährdende Gase zurückgehalten werden.

Intumeszierendes Material zeigt ein besonders gutes Expansionsverhalten. Eine intumeszierende Dichtung reagiert unter Wärmeeinwirkung und/ oder Feuereinwirkung und ist daher thermisch aktivierbar. Sie reagiert, indem sie um ein Mehrfaches ihrer ursprünglichen Dicke aufquillt. Hierbei baut die Dichtung eine isolierende Schutzlage durch Verkohlung auf. Die Struktur, auf der sie aufliegt, wird gegen Wärme- und/ oder Feuereinwirkung geschützt.

Eine Intumeszenz wird üblicherweise durch mindestens drei Komponenten erreicht. Die erste Komponente ist eine Kohlenstoffquelle, wie beispielsweise Pentaerythrit oder Dipentaerythrit. Die zweite Komponente ist ein Treibmittel, wie beispielsweise Melamin und festes Chlorparaffin. Die dritte Komponente ist ein Mineralsäure-Katalysator, wie beispielsweise Ammoniumpolyphosphat.

Sobald ein intumeszierendes Material erwärmt oder erhitzt wird, laufen mehrere chemische Reaktionen ab. Ammoniumpolyphosphat zerfällt und erzeugt Phosphorsäure. Phosphorsäure bewirkt eine Dehydratisierung von Pentaerythrit oder Dipentaerythrit und erzeugt eine kohlenstoffhaltige Lage. Das Treibmittel zerfällt unter Freisetzung von nicht brennbaren Gasen. Die Gase führen zur Aufschäumung der kohlenstoffhaltigen Lage. Hierdurch wird eine Schaumstruktur gebildet, die als Wärmeisolator hochwirksam ist.

Als intumeszierende Materialien, die beispielsweise ab ca. 200 bis 250 °C reagieren, indem sie um ein Mehrfaches ihrer ursprünglichen Schichtdicke aufquellen, seien Blähgraphit und Vermikulit genannt.

Es ist ein erstes Teilventil vorgesehen, welches thermisch aktivierbar ist, um eine erste Fluidleitung zwischen dem ersten Abschnitt und dem zweiten Abschnitt abzusperren, und es ist ein zweites Teilventil vorgesehen, welches thermisch aktivierbar ist, um eine zweite Fluidleitung zwischen dem ersten Abschnitt und dem zweiten Abschnitt abzusperren. Es kann eine erste Fluidleitung im Brandfall so abgesperrt werden, dass eine permanente Belüftungsöffnung zwischen der Atmosphäre und dem Inneren des Batteriegehäuses feuerfest verschlossen ist. Weiter kann das zweite Teilventil, welches thermisch aktivierbar ist, eine zweite Fluidleitung im Brandfall so absperren, dass auch eine für den Druckabbau vorgesehene Öffnung feuerfest verschlossen ist.

Vor diesem Hintergrund könnte eine erste Fluidleitung zum Druckausgleich zwischen Atmosphäre und dem Inneren des Batteriegehäuses geöffnet sein und nur durch thermische Beaufschlagung verschließbar sein, wobei eine zweite Fluidleitung zum Druckabbau durch einen definierten Überdruck innerhalb des Batteriegehäuses relativ zum Atmosphärendruck sowohl druckgesteuert öffenbar als auch thermisch verschließbar ist oder auch nur druckgesteuert öffenbar ist. Die erste Fluidleitung kann so eine permanente Belüftung und einen Druckausgleich bei kleinen Über- bzw. Unterdrücken bewirken und nur im Brandfall geschlossen werden. Die zweite Fluidleitung dient dem Abbau größerer Überdrücke im Inneren des Batteriegehäuses gegenüber der Atmosphäre und kann ebenfalls im Brandfall feuerfest verschlossen werden.

Das Teilventil, insbesondere ein erstes Teilventil, könnte eine Kugel aufweisen, welche durch eine der Kugel zugeordnete Feder gegen einen Anschlag pressbar ist, um eine Entlüftungsöffnung einer Fluidleitung, insbesondere einer druckausgleichenden Fluidleitung, zu verschließen. Eine Kugel ist ein deformierungsstabiler Körper, der aus einem feuerfesten Material gefertigt werden kann. Eine Kugel ist gut innerhalb des Ventils zum Druckausgleich und/ oder Drucküberlastabbau führbar.

Es ist jedoch auch denkbar, anstelle einer Kugel einen anderen federbelasteten und/ oder kraftbelasteten Körper zu verwenden, der eine Entlüftungsöffnung verschließen kann. Beispielsweise ist denkbar, einen Zylinder anstelle einer Kugel zu verwenden.

Die der Kugel zugeordnete Feder könnte im geöffneten Zustand des Teilventils vorgespannt sein. Alternativ oder zusätzlich könnte diese Feder durch eine Legierung mit niedriger Schmelztemperatur entspannbar oder freigebbar sein. Durch eine Feder wird die Kugel mit hoher Kraft gegen den Anschlag gepresst. Eine Legierung kann zuverlässig die Feder auslösen.

Mindestens ein Teilventil könnte einen Verbund mit einer intumeszierenden Dichtung aufweisen, wobei mindestens eine Komponente oder Lage des Verbunds fluiddurchlässig ist. Hierdurch ist es möglich, mindestens eine Lage des Verbunds offenporig, nämlich insbesondere als Deckgewebe oder Isolierschicht, auszugestalten, welche aufgrund ihrer Porosität einen Fluidaustausch ermöglicht. Der Fluidaustausch ermöglicht einen Druckausgleich und ein Atmen des Ventils im Normalbetrieb.

Vor diesem Hintergrund könnte der Verbund Teil der ersten, druckausgleichenden, aber bevorzugt nicht der zweiten druckabbauenden Fluidleitung sein. Die zweite Fluidleitung, welche dem Druckabbau dient, kann geschaffen werden, indem der Verbund von Öffnungen oder Durchgängen abgehoben wird. Im Normalbetrieb kann der Verbund aber die Öffnungen oder Durchgänge abdecken, so dass nur ein geringer Fluidstrom zum Druckausgleich durch die Öffnungen und Durchgänge erfolgt.

Das oder ein zweites Teilventil könnte eine intumeszierende Dichtung aufweisen, welche durch eine Feder mit Druck beaufschlagbar ist, um eine Absperrung einer Fluidleitung, insbesondere einer druckabbauenden Fluidleitung, herzustellen. Die intumeszierende Dichtung dichtet im Normalfall, also nicht im Brandfall, zuverlässig ab, indem sie durch die Feder mit Kraft beaufschlagt und gegen einen Dichtsitz gepresst wird. Im Brandfall schäumt die intumeszierende Dichtung auf oder vergrößert in anderer Weise ihr Volumen, so dass die Fluidleitung so verschlossen ist, dass keine Flammen durch diese hindurch gelangen können. Dichtungen aus Elastomer würden im Brandfall verbrennen und Flammen oder gesundheitsgefährdenden Gasen erlauben, durch die Fluidleitung zu gelangen.

Die intumeszierende Dichtung könnte gegen eine Dichtung pressbar sein. Hierdurch ist eine zuverlässige Abdichtung gegeben. Alternativ oder zusätzlich könnte die intumeszierende Dichtung gegen eine Dichtfläche pressbar sein. Hierdurch sind ein definierter Dichtsitz und eine zuverlässige Abdichtung gegeben.

Die Dichtfläche könnte thermisch stabiler als die Dichtung sein. Alternativ oder zusätzlich könnte die Dichtung bei thermischer Belastung zeitlich vor der Dichtfläche verbrennbar oder zerstörbar sein. Hierdurch ist sichergestellt, dass die intumeszierende Dichtung an der Dichtfläche dichtend anliegen kann, auch wenn die Dichtung bereits verbrannt ist.

Ein zweites Teilventil oder das Teilventil könnte einen Ventilteller aufweisen, der durch die Feder gegen die Dichtung und/ oder gegen die Dichtfläche pressbar ist. Der Ventilteller verteilt die Kraft der Feder flächig auf die intumeszierende Dichtung. So kann ein guter Schutz gegen Flammen und gesundheitsgefährdende Gase erzielt werden.

Die intumeszierende Dichtung könnte zwischen dem Ventilteller und der Dichtung und/ oder der Dichtfläche angeordnet sein. Die intumeszierende Dichtung kann durch den Ventilteller und die Dichtung bzw. die Dichtfläche sandwichartig verpresst werden.

Eine Fluidleitung, insbesondere eine druckausgleichende Fluidleitung, könnte eine Entlüftungsöffnung im zweiten Abschnitt und eine weitere Entlüftungsöffnung im ersten Abschnitt aufweisen, wobei die jeweiligen Entlüftungsöffnungen jeweils dem Inneren eines Batteriegehäuses bzw. der Atmosphäre fluidleitend zugewandt sind. So kann ein Gasaustausch zwischen der Atmosphäre und dem Inneren des Batteriegehäuses erfolgen.

Die weitere Entlüftungsöffnung könnte in einen Raum münden, in dem eine Entlüftungsmembran und/ oder ein gesintertes PTFE (Polytetrafluoethylen)-Element angeordnet ist. Die Entlüftungsmembran bzw. das PTFE-Element kann luftdurchlässig sein, aber Flüssigkeiten und Feuchtigkeit zurückhalten.

Zwei Teile des Gehäuses oder der erste Abschnitt und der zweite Abschnitt des Gehäuses könnten durch ein Verschraubungselement miteinander verschraubbar sein. Das Verschraubungselement zieht die Teile bzw. Abschnitte gegeneinander, wobei ein Deckel eines Batteriegehäuses zwischen den Teilen bzw. Abschnitten verpresst sein kann. So ist eine dichtende Anlage der Teile oder Abschnitte an beiden Seiten eines Deckels ermöglicht. Das Gehäuse kann zweiteilig aufgebaut und problemlos an einem Durchgang eines Deckels angeordnet werden.

Ein Teil des Gehäuses oder der zweite Abschnitt könnte unter Zwischenlage einer Gehäusedichtung und/ oder einer zweiten intumeszierenden Dichtung gegen einen Deckel eines Batteriegehäuses dichtend anlegbar sein. Hierdurch ist eine dichtende Anlage am Deckel realisiert.

Ein Batteriegehäuse umfasst ein Ventil zum Druckausgleich und/ oder Drucküberlastabbau der hier beschriebenen Art. Bevorzugt wird ein solches Batteriegehäuse in einem Fahrzeug, insbesondere einem Kraftfahrzeug oder Automobil, verwendet. Fahrzeuge können auch Boote, Schiffe oder Schwimmkräne sein. Denkbar ist auch, das hier beschriebene Ventil in stationären Anwendungen zu verwenden, beispielsweise in der Haustechnik.

Das Ventil kann sowohl im Deckel des Batteriegehäuses, aber auch in jeder Wandung bzw. Außenwandung des Batteriegehäuses vorgesehen sein.

Das Ventil zum Druckausgleich und/ oder Drucküberlastabbau könnte einen Deckel des Batteriegehäuses durchgreifen und mit einem ersten Abschnitt seines Gehäuses der Atmosphäre zugewandt sein und mit einem zweiten Abschnitt seines Gehäuses dem Inneren des Batteriegehäuses zugewandt sein. So kann das Ventil zum Druckausgleich und/ oder Drucküberlastabbau kompakt mit dem Batteriegehäuse verbunden werden. Es steht im Wesentlichen nur ein Bereich des Gehäuses domartig vom Deckel ab, und zwar in der Richtung, in der mehr Bauraum zur Verfügung steht.

In der Zeichnung zeigen
- Fig. 1: eine teilweise geschnittene und perspektivische Ansicht eines Ventils zum Druckausgleich und/ oder Drucküberlastabbau, welches in einem Deckel eines Batteriegehäuses angeordnet ist,
- Fig. 2: eine weitere teilweise geschnittene und perspektivische Ansicht eines Ventils zum Druckausgleich und/ oder Drucküberlastabbau, welches in einem Deckel eines Batteriegehäuses angeordnet ist,
- Fig. 3: eine Schnittansicht des Ventils zum Druckausgleich und/ oder Drucküberlastabbau gemäß Fig. 2, wobei die Schnittebene durch das Verschraubungselement verläuft,
- Fig. 4: eine Schnittansicht des Ventils zum Druckausgleich und/ oder Drucküberlastabbau gemäß Fig. 3, wobei die beiden Teilventile schematisch durch gestrichelte Linien dargestellt sind, die die Bereiche des Ventils zum Druckausgleich und/ oder Drucküberlastabbau zeigen, in denen sich die Teilventile befinden,
- Fig. 5: ein weiteres Ventil zum Druckausgleich und/ oder Drucküberlastabbau, welches einen anderen Aufbau als das Ventil zum Druckausgleich und/ oder Drucküberlastabbau der Fig. 1 bis 4 aufweist, wobei das Ventil zum Druckausgleich und/ oder Drucküberlastabbau in einen Deckel des Batteriegehäuses eingebaut ist,
- Fig. 6: die Anordnung gemäß Fig. 5 von unten aus der Sicht des Inneren des Batteriegehäuses,
- Fig. 7: das Ventil zum Druckausgleich und/ oder Drucküberlastabbau nach Fig. 5 ohne Batteriegehäuse,
- Fig. 8: ein Batteriegehäuse, das in Kammern unterteilt ist, wobei im Deckel des Batteriegehäuses Ventile zum Druckausgleich und/ oder Drucküberlastabbau angeordnet sind,
- Fig. 9: das Batteriegehäuse gemäß Fig. 8 in geschlossenem Zustand, wobei dargestellt ist, dass ein Ventil zum Druckausgleich und/oder Drucküberlastabbau als Ganzes in den Deckel einsetzbar ist,
- Fig. 10: das Batteriegehäuse gemäß Fig. 8 und 9, wobei dargestellt ist, dass eine Kabeldurchführung zwischen zwei Kammern des Batteriegehäuses vorgesehen ist,
- Fig. 11: ein weiteres Ventil mit einem atmenden, abschnittsweise offenporigen Verbund in einer Schnittansicht,
- Fig. 12: das weitere Ventil gemäß Fig. 11 in einer perspektivischen Schnittansicht,
- Fig. 13: verschiedene Ansichten des Ventils gemäß Fig. 11,
- Fig. 14: den Weg eines Fluids durch einen atmenden Verbund,
- Fig. 15: eine perspektivische Teilansicht eines Batteriegehäuses, in dem ein Ventil des Stands der Technik verbaut ist, wobei das Ventil eine nicht hochtemperaturbeständige metallische Einfassung und eine aufgeklebte Druckausgleichsmembran umfasst,
- Fig. 16: eine perspektivische Teilansicht des Batteriegehäuses gemäß Fig. 15 von innen, wobei in oder an den Außenwandungen des Batteriegehäuses ein Ventil verbaut ist, welches eine intumeszierende Dichtung aufweist,
- Fig. 17: eine Schnittansicht eines Ventils gemäß Fig. 16, welches an oder in einer Außenwandung des Batteriegehäuses verbaut ist und eine intumeszierende Dichtung und eine perforierte Metallfolie aufweist, und
- Fig. 18: eine schematische Ansicht des Druckabbaus im Brand- oder Havariefall.

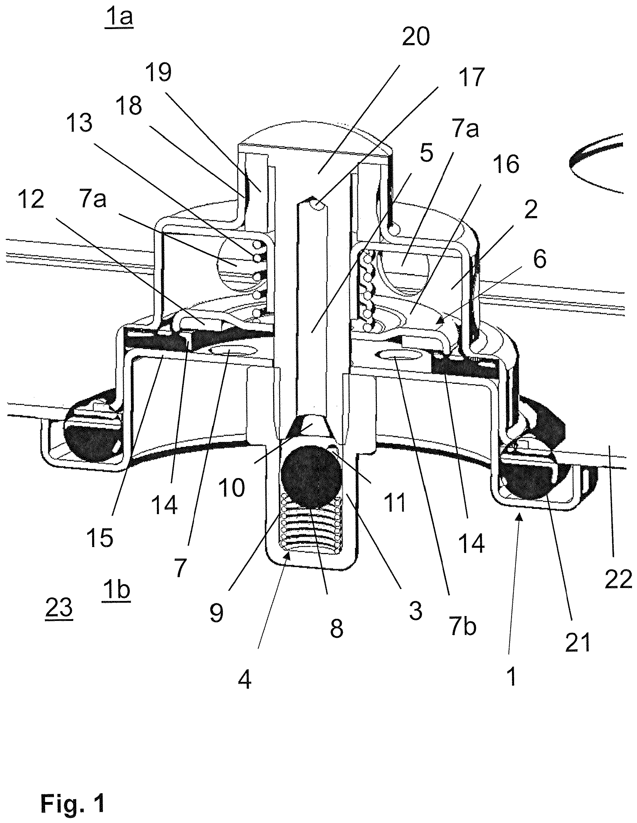

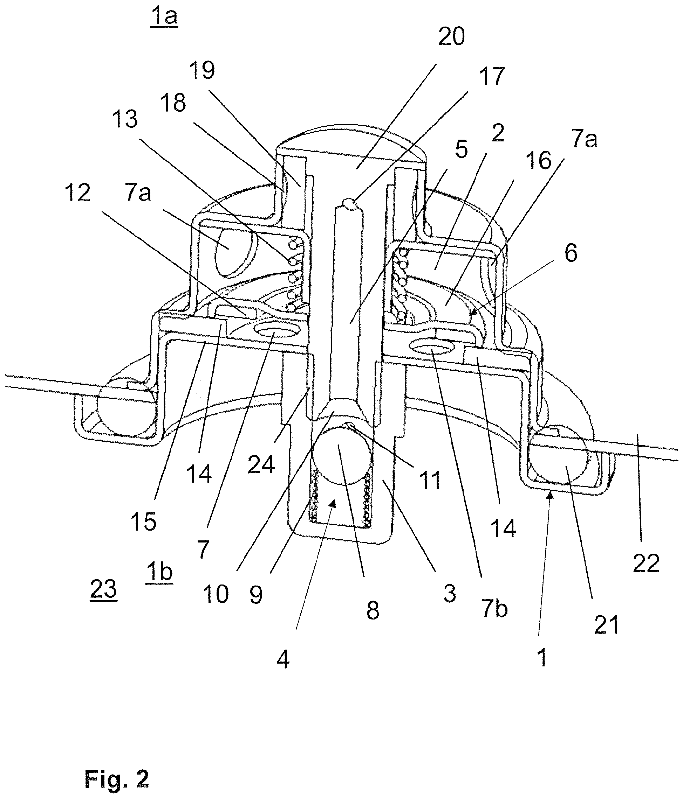

Fig. 1 und 2 zeigen ein Ventil zum Druckausgleich und/ oder Drucküberlastabbau für ein Batteriegehäuse 23, umfassend ein Gehäuse 1 mit einem der Atmosphäre 1a zugewendeten ersten Abschnitt 2 und einem dem Inneren 1b des Batteriegehäuses 23 zugewendeten zweiten Abschnitt 3, wobei die beiden Abschnitte 2, 3 absperrbar fluidleitend miteinander verbunden sind.

Es ist mindestens ein Teilventil 4, 6 vorgesehen, welches thermisch aktivierbar ist, um eine druckausgleichende und/ oder druckabbauende Fluidleitung 5, 7 zwischen dem ersten Abschnitt 2 und dem zweiten Abschnitt 3 im Brandfall abzusperren.

Konkret ist ein erstes Teilventil 4 vorgesehen, welches thermisch aktivierbar ist, um eine erste, druckausgleichende Fluidleitung 5 zwischen dem ersten Abschnitt 2 und dem zweiten Abschnitt 3 abzusperren.

Konkret ist des Weiteren ein zweites Teilventil 6 vorgesehen, welches thermisch aktivierbar ist, um eine zweite, druckabbauende Fluidleitung 7 zwischen dem ersten Abschnitt 2 und dem zweiten Abschnitt 3 abzusperren.

Die erste Fluidleitung 5 ist im Normalbetrieb permanent zum Druckausgleich zwischen Atmosphäre 1a und dem Inneren 1b des Batteriegehäuses 23 geöffnet und nur durch thermische Beaufschlagung verschließbar.

Die zweite Fluidleitung 7 ist zum Druckabbau durch einen definierten Überdruck innerhalb des Batteriegehäuses 23 relativ zum Atmosphärendruck sowohl druckgesteuert öffenbar als auch thermisch verschließbar. Wenn kein Brandfall eingetreten ist, werden größere Überdrücke im Inneren 1b des Batteriegehäuses 23 durch die zweite Fluidleitung 7 abgebaut.

Das erste Teilventil 4 weist eine Kugel 8 auf, welche durch eine erste, der Kugel 8 zugeordnete Feder 9, gegen einen Anschlag 10 pressbar ist, um eine Entlüftungsöffnung 11 der ersten Fluidleitung 5 zu verschließen. Die erste Feder 9 ist im geöffneten Zustand des Teilventils 4 vorgespannt und im Brandfall durch eine Legierung mit niedriger Schmelztemperatur entspannbar oder freigebbar.

Das zweite Teilventil 6 weist eine intumeszierende Dichtung 12 auf, welche durch eine zweite Feder 13 mit Druck beaufschlagt ist, um eine Absperrung der zweiten Fluidleitung 7 herzustellen. Die intumeszierende Dichtung 12 ist gegen eine Dichtung 14 gepresst. Die intumeszierende Dichtung 12 hebt von der Dichtung 14 ab, wenn der Überdruck im Inneren 1b des Batteriegehäuses 23 die zweite Feder 13 komprimiert. Dann erfolgt ein Druckabbau über die zweite Fluidleitung 7 und die Durchgänge 7a, 7b.

Die Dichtfläche 15 ist thermisch stabiler als die Dichtung 14 und die Dichtung 14 wird bei thermischer Belastung zeitlich vor der Dichtfläche 15 verbrannt oder zerstört.

Das zweite Teilventil 6 weist einen Ventilteller 16 auf, der durch die zweite Feder 13 gegen die Dichtung 14 und gegen die Dichtfläche 15 pressbar ist. Im Brandfall, wenn die Dichtung 14 verbrannt ist, drückt die zweite Feder 13 die dann bereits intumeszierte Dichtung 12 gegen die Dichtfläche 15.

Die intumeszierende Dichtung 12 ist daher zwischen dem Ventilteller 16 und der Dichtung 14 und/ oder der Dichtfläche 15 angeordnet.

Die erste Fluidleitung 5 weist eine Entlüftungsöffnung 11 im zweiten Abschnitt 3 und eine weitere Entlüftungsöffnung 17 im ersten Abschnitt 2 auf, wobei die jeweiligen Entlüftungsöffnungen 11, 17 jeweils dem Inneren 1b des Batteriegehäuses 23 bzw. der Atmosphäre 1a fluidleitend zugewandt sind.

Die weitere Entlüftungsöffnung 17 mündet in einen Raum 18, nämlich einen Ringraum, in dem ein gesintertes PTFE-Element 19 angeordnet ist.

Der erste Abschnitt 2 und der zweite Abschnitt 3 des Gehäuses 1 sind durch ein Verschraubungselement 20 miteinander verschraubt. Der zweite Abschnitt 3 ist unter Zwischenlage einer Gehäusedichtung 21 gegen einen Deckel 22 des Batteriegehäuses 23 dichtend angelegt.

Fig. 1 und 2 zeigen insoweit abschnittsweise ein Batteriegehäuse 23, umfassend ein Ventil zum Druckausgleich und/ oder Drucküberlastabbau, wobei das Ventil zum Druckausgleich und/ oder Drucküberlastabbau den Deckel 22 des Batteriegehäuses 23 durchgreift und mit einem ersten Abschnitt 2 seines Gehäuses 1 der Atmosphäre 1a zugewandt ist und mit einem zweiten Abschnitt 3 seines Gehäuses 1 dem Inneren 1b des Batteriegehäuses 23 zugewandt ist.

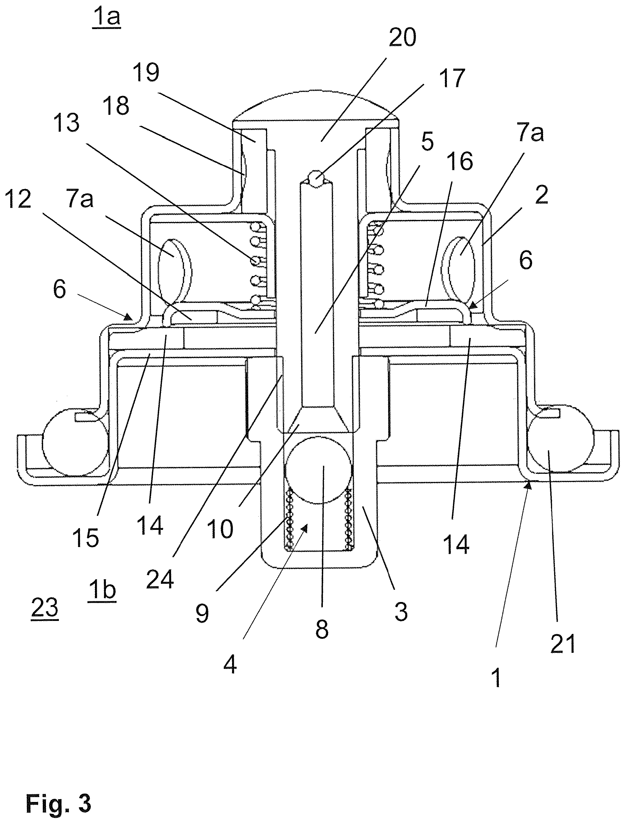

Fig. 3 zeigt das Ventil zum Druckausgleich und/ oder Drucküberlastabbau ohne den Deckel 22 des Batteriegehäuses 23. Fig. 3 zeigt konkret, dass der Ventilteller 16 mit seinem Rand auf der Dichtung 14 dichtend aufliegt. So ist die zweite Fluidleitung 7 im Normalfall verschlossen. Die zweite Feder 13 ist so weich, dass sie im Falle eines Überdrucks im Batteriegehäuse 23 komprimiert werden kann, so dass der Ventilteller 16 von der Dichtung 14 abhebt. So wird die zweite Fluidleitung 7 geöffnet und es kann Druck über die Öffnungen 7a, 7b abgebaut werden.

Die Feder 13 ist aber auch so stark, dass sie im Brandfall die intumeszierende oder bereits intumeszierte Dichtung 12 auf die metallische Dichtfläche 15 pressen kann, auch wenn die Dichtung 14 zersetzt oder verbrannt ist.

Das Gehäuse 1 besteht bevorzugt aus Metall. Das Verschraubungselement 20, welches ebenfalls bevorzugt aus Metall besteht, ist mit einem Gewinde 24 im unteren Abschnitt 3 in Eingriff und drückt daher den oberen Abschnitt 2 gegen den unteren Abschnitt 3. Das Verschraubungselement 20 dient der Montage und Verschraubung des Gehäuses 1 am Deckel 22.

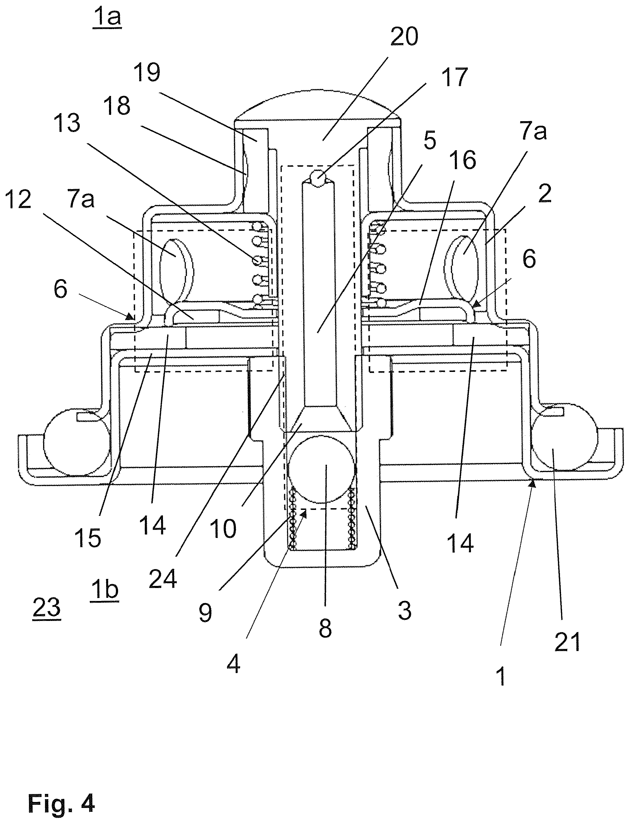

Fig. 4 zeigt das erste Teilventil 4 in Form eines Bereichs des Ventils zum Druckausgleich und/ oder Drucküberlastabbau, der gestrichelt dargestellt ist. Fig. 4 zeigt auch das zweite Teilventil 6 in Form eines Bereichs des Ventils zum Druckausgleich und/ oder Drucküberlastabbau, der ebenfalls gestrichelt dargestellt ist. Der Übersichtlichkeit halber wurden zwei gestrichelte Bereiche dargestellt, um nicht mit dem Bereich des ersten Teilventils 4 zu überlappen.

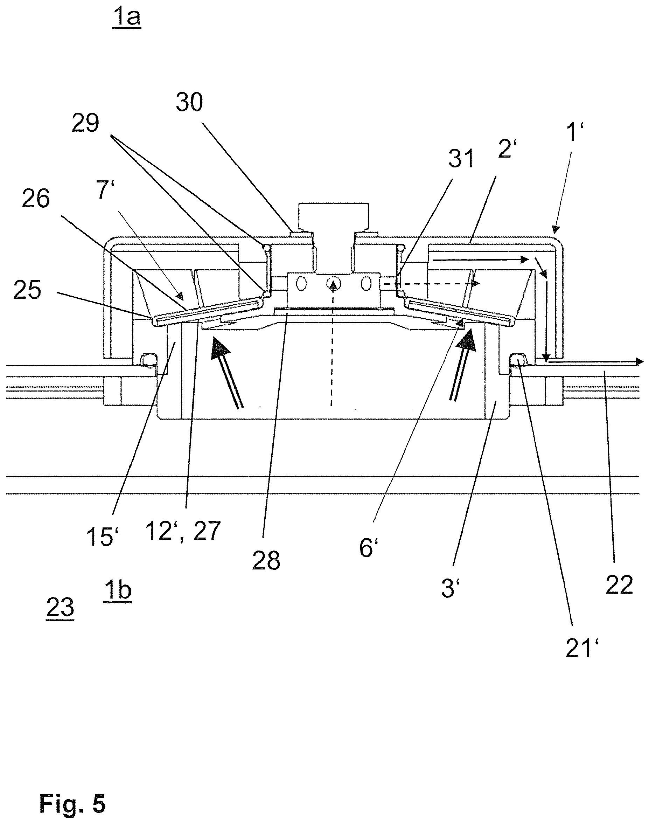

Fig. 5 zeigt ein weiteres Ventil zum Druckausgleich und/ oder Drucküberlastabbau, welches einen anderen Aufbau als das Ventil zum Druckausgleich und/ oder Drucküberlastabbau der Fig. 1 bis 4 aufweist, mit einem Gehäuse 1', wobei das Ventil zum Druckausgleich und/ oder Drucküberlastabbau in einen Deckel 22 des Batteriegehäuses 23 eingebaut ist.

Das Ventil zum Druckausgleich und/ oder Drucküberlastabbau weist als Feder eine Tellerfeder 25 auf. Auf der Seite der Tellerfeder 25, welche der Atmosphäre 1a zugewandt ist, ist eine IP-Dichtung 26 angeordnet. Eine IP-Dichtung soll die Schutzklasse IP67 erfüllen und gegen Staub und Wasser während zumindest eines gewissen Zeitraums abdichten. Die IP-Dichtung kann aus einem Elastomer oder einem Kunststoff gefertigt sein.

Auf der Seite der Tellerfeder 25, welche dem Inneren 1b des Batteriegehäuses 23 zugewandt ist, ist eine intumeszierende Dichtung 12' angeordnet. Konkret ist auf die Seite der Tellerfeder 25, welche dem Inneren 1b des Batteriegehäuses 23 zugewandt ist, eine intumeszierende Schicht 27 aufgeklebt.

Dem Inneren 1b des Batteriegehäuses 23 ist außerdem eine mit intumeszierendem Material versehene, perforierte Metallplatte 28 zugewandt. Es sind des Weiteren O-Ringe 29, eine Dichtscheibe 30 und eine Membran 31 vorgesehen. Die Membran 31 fungiert als Druckausgleichsmembran.

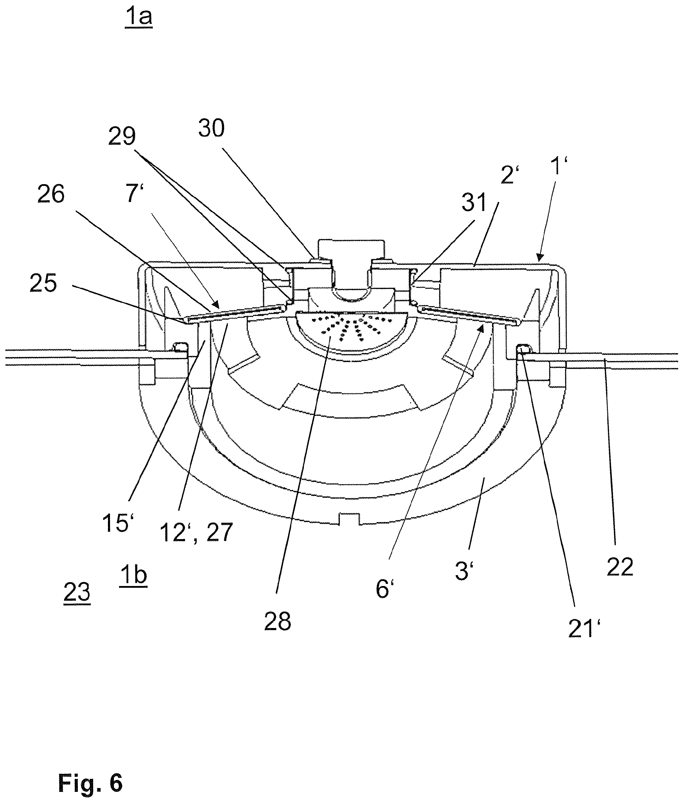

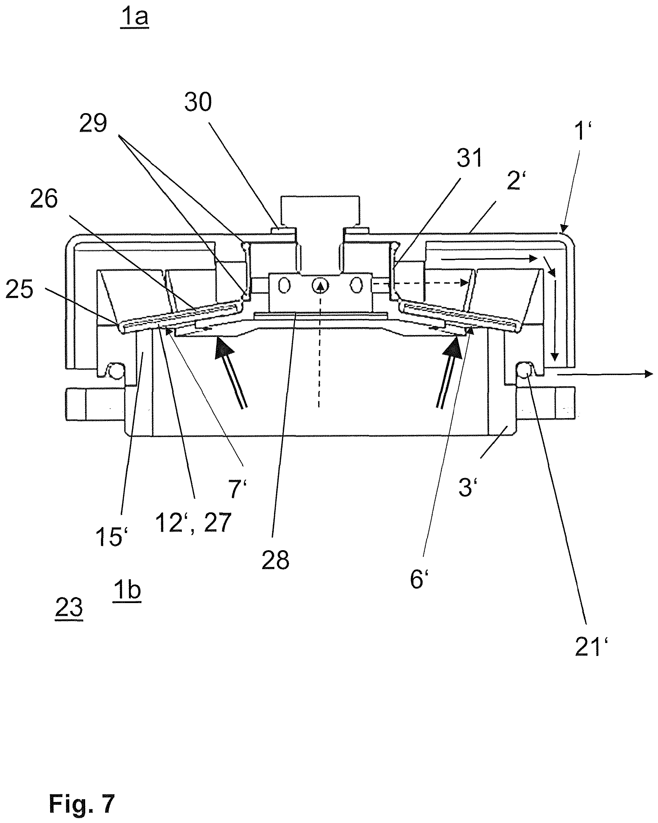

Fig. 6 zeigt die Anordnung gemäß Fig. 5 von unten aus der Sicht des Inneren 1b des Batteriegehäuses 23. Fig. 7 zeigt das Ventil zum Druckausgleich und/ oder Drucküberlastabbau nach Fig. 5 ohne Deckel 22.

Wenn innerhalb des Batteriegehäuses 23 eine Drucküberlast auftritt wirkt, wie in Fig. 5 dargestellt, deren Druck in Richtung der doppelt strichlierten Pfeile auf die Tellerfeder 25.

Ein Druckausgleich im Normalbetrieb kann in Richtung der unterbrochenen strichlierten Pfeile erfolgen. Eine Be- oder Entlüftung des Inneren 1b erfolgt in Richtung der durchgezogenen einfach strichlierten Pfeile.

Im Normalbetrieb erfolgt ein Druckausgleich zwischen Innerem 1b und Atmosphäre 1a durch die perforierte Metallplatte 28 und die Membran 31. Bei einem plötzlichen Druckanstieg löst die Tellerfeder 25 aus und schließt nach dem Druckabbau wieder dicht ab. Im Brandfall oder Havariefall reagieren die intumeszierenden Komponenten und dichten über einen bestimmten Zeitraum ab.

Insoweit ist die Tellerfeder 25 eine Komponente eines Teilventils 6', welches thermisch aktivierbar ist, um eine druckausgleichende Fluidleitung 7' zwischen dem ersten Abschnitt 2' und dem zweiten Abschnitt 3' abzusperren und/ oder durch eine intumeszierende Dichtung 12' zu verschließen.

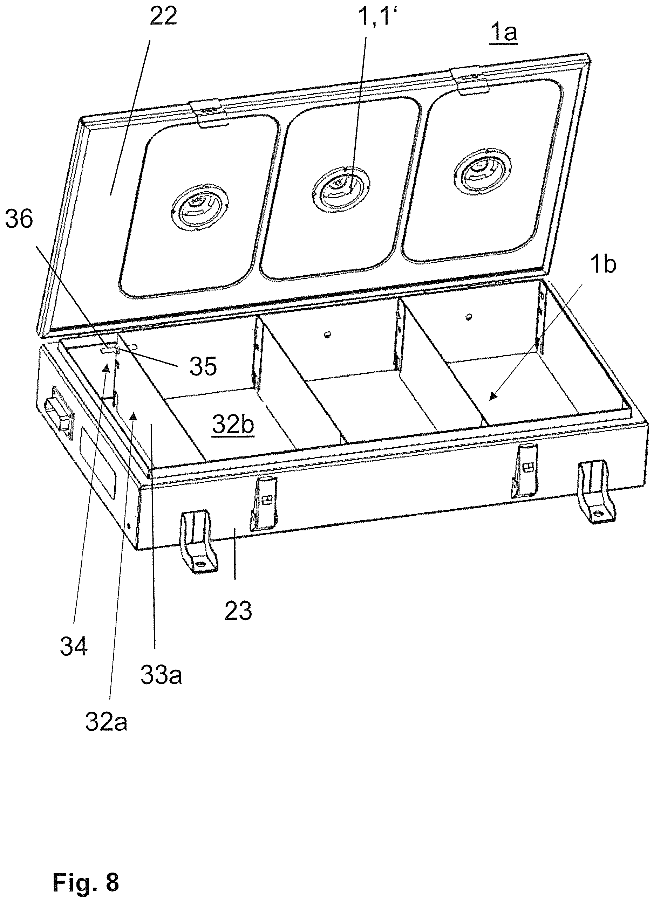

Fig. 8 zeigt das Batteriegehäuse 23, das in Kammern 32a, 32b unterteilt ist, wobei im Deckel 22 des Batteriegehäuses 23 Ventile zum Druckausgleich und/ oder Drucküberlastabbau gemäß Fig. 1 bis 4 oder Fig. 5 bis 7 angeordnet sind.

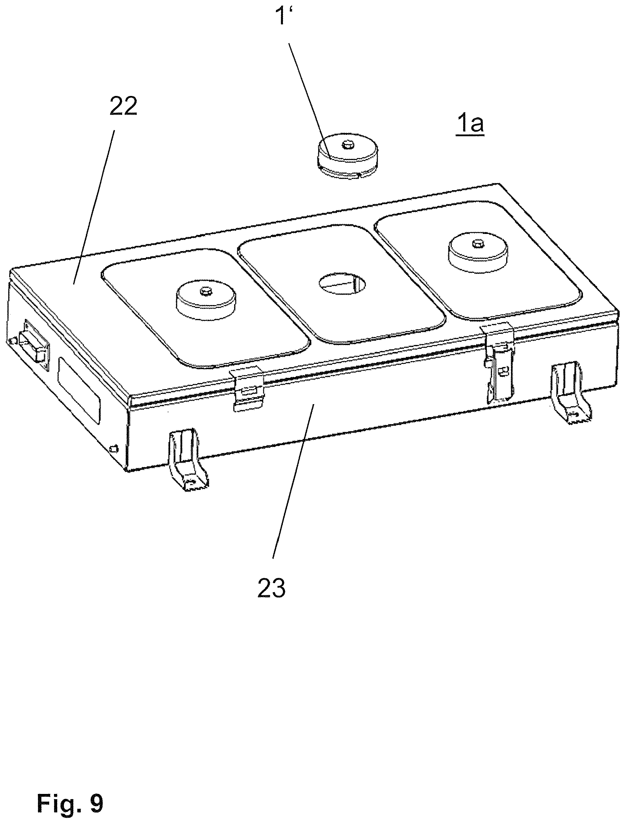

Fig. 9 zeigt das Batteriegehäuse gemäß Fig. 8 in geschlossenem Zustand, wobei dargestellt ist, dass ein Ventil zum Druckausgleich und/ oder Drucküberlastabbau als Ganzes in den Deckel 22 einsetzbar ist.

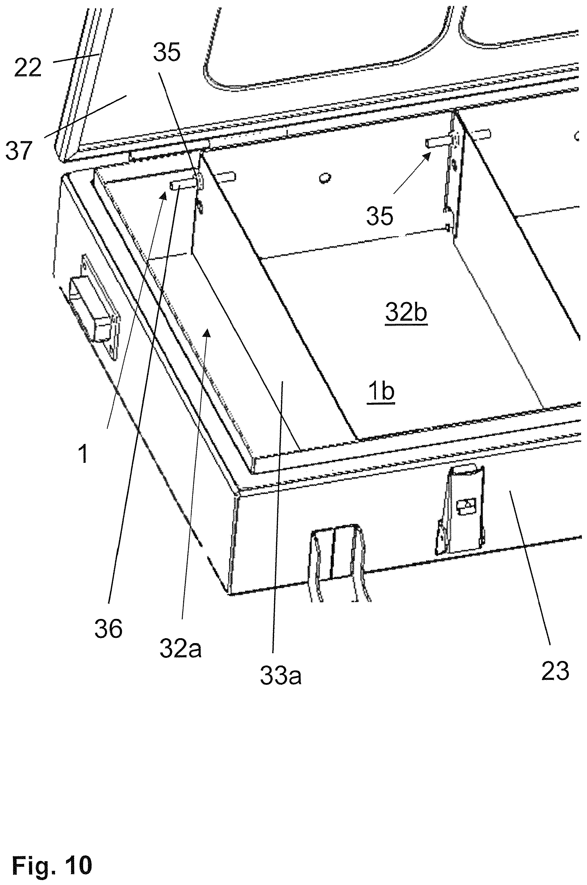

Fig. 10 zeigt im Detail, dass zwei Kammern 32a, 32b des Batteriegehäuses 23 sind durch eine Kammerwand 33a voneinander getrennt. Durch die Kammerwand 33a führt eine Kabeldurchführung 34.

Die Kabeldurchführung 34 des Batteriegehäuses 23, umfasst einen Dichtkörper 35, der einen Durchgang für ein Kabel 36 oder eine Leitung aufweist. Der Dichtkörper 35 weist ein intumeszierendes Material auf oder ist aus einem solchen Material gefertigt. Im Brandfall kann der Dichtkörper 35 den Durchbruch durch die Kammerwand 33a für das zersetzte oder verbrannte Kabel 36 feuerfest verschließen.

Die dem Inneren 1b zugewandte Seite des Deckels 22 kann mit einer Schicht 37 versehen sein, die intumeszierendes Material aufweist oder aus einem solchen Material gefertigt ist. So kann die Qualität des Brandschutzes noch verbessert werden.

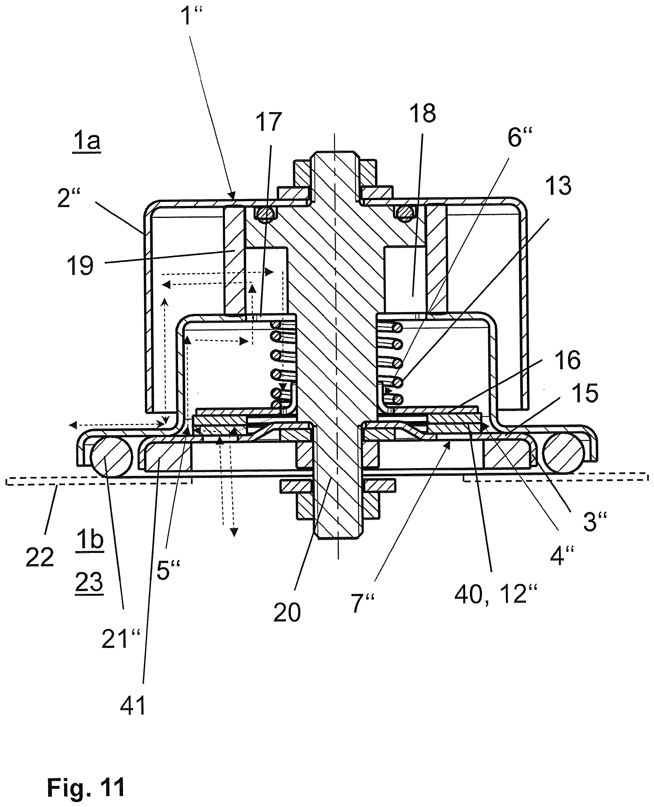

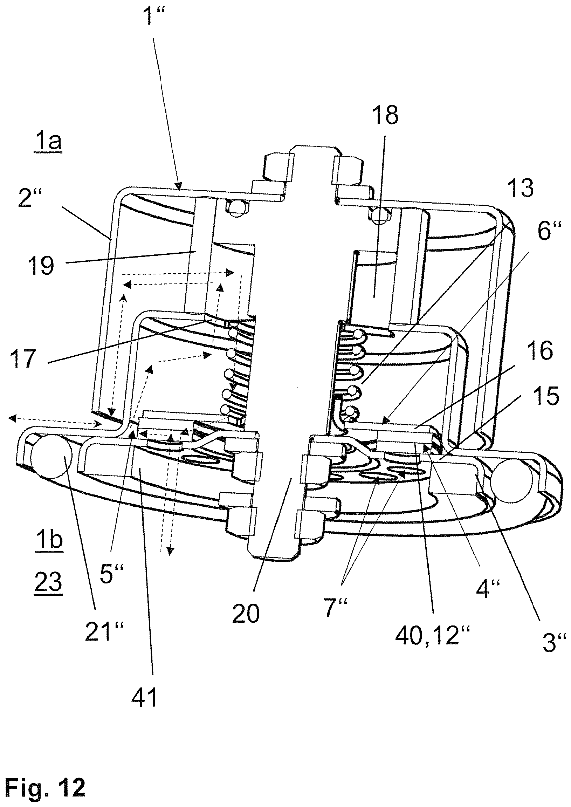

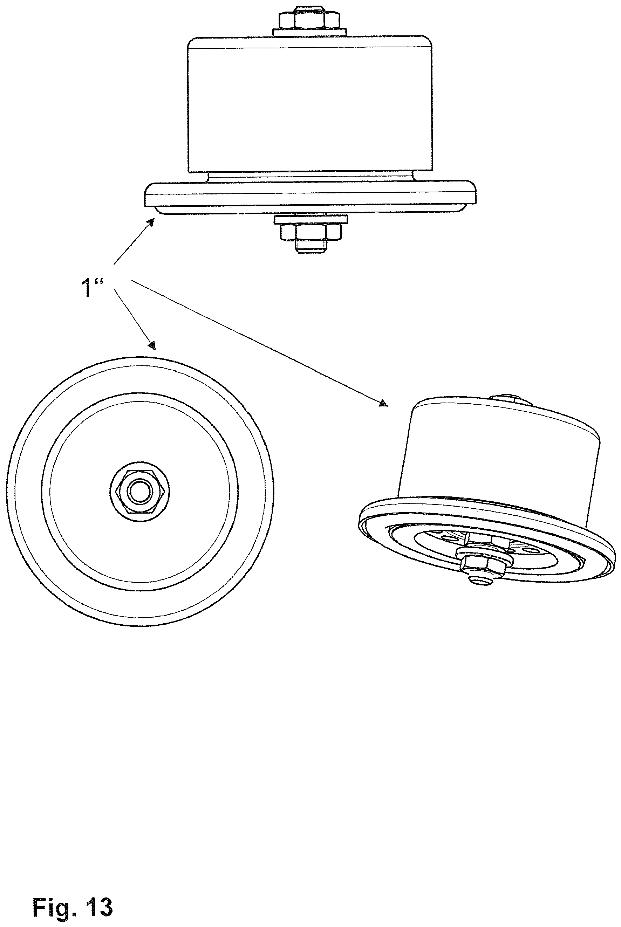

Fig. 11 bis 13 zeigen ein Ventil zum Druckausgleich und Drucküberlastabbau für ein Batteriegehäuse 23, welches ein Gehäuse 1" mit einem der Atmosphäre 1a zuwendbaren ersten Abschnitt 2" und einem dem Inneren 1b eines Batteriegehäuses 23 zuwendbaren zweiten Abschnitt 3" umfasst. Die beiden Abschnitte 2", 3" sind absperrbar fluidleitend miteinander verbunden.

Es ist mindestens ein Teilventil 4" vorgesehen, welches thermisch aktivierbar ist, um eine druckausgleichende Fluidleitung 5" zwischen dem ersten Abschnitt 2" und dem zweiten Abschnitt 3" abzusperren und durch eine intumeszierende Dichtung 12" zu verschließen.

Die druckausgleichende Fluidleitung 5" führt durch mindestens eine Lage eines Verbunds 40, welcher eine intumeszierende Dichtung 12" umfasst.

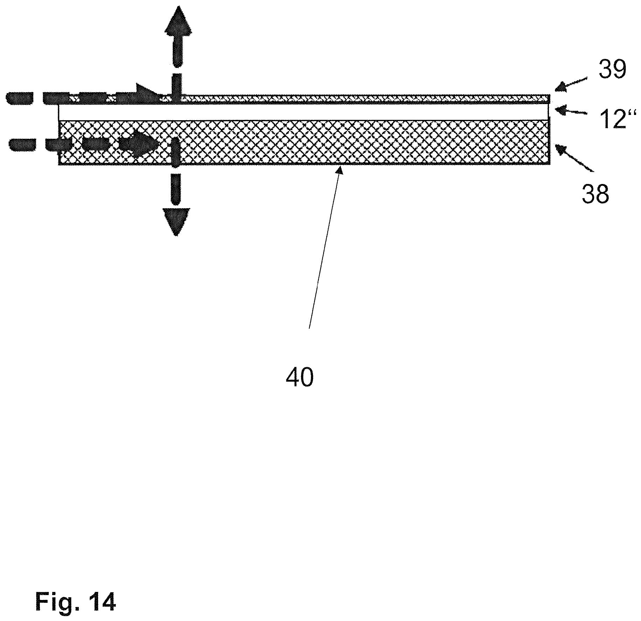

Die gestrichelten Pfeile zeigen, dass durch den Verbund 40 hindurch sowohl ein Fluidaustausch von der Atmosphäre 1a in das Innere 1b des Batteriegehäuses 23 erfolgt, als auch umgekehrt. Der Aufbau des Verbunds 40 ist konkret in Fig. 14 dargestellt.

Die intumeszierende Dichtung 12" ist sandwichartig zwischen einer offenporigen ersten Lage, die als Isolierschicht 38 ausgebildet ist, und einer offenporigen zweiten Lage, die als Deckgewebe 39 ausgebildet ist, aufgenommen. Sowohl durch die Isolierschicht 38 als auch durch das Deckgewebe 39 kann Fluid zum Druckausgleich dauerhaft im Normalbetrieb hindurchtreten. Die ist durch gestrichelte Pfeile dargestellt.

Weiter ist mindestens ein Teilventil 6" vorgesehen, welches thermisch aktivierbar ist, um eine druckabbauende Fluidleitung 7" zwischen dem ersten Abschnitt 2" und dem zweiten Abschnitt 3" abzusperren und/ oder durch die intumeszierende Dichtung 12" zu verschließen.

Das erste Teilventil 4" ist thermisch aktivierbar, um die erste, druckausgleichende Fluidleitung 5" zwischen dem ersten Abschnitt 2" und dem zweiten Abschnitt 3" im Brandfall abzusperren. Das zweite Teilventil 6" ist ebenfalls thermisch aktivierbar, um die zweite Fluidleitung 7" zwischen dem ersten Abschnitt 2" und dem zweiten Abschnitt 3" im Brandfall abzusperren.

Jedes Teilventil 4", 6" weist den Verbund 40 mit der intumeszierenden Dichtung 12" auf, wobei mindestens eine Komponente des Verbunds 40 fluiddurchlässig ist. Der Verbund 40 ist Teil der ersten, druckausgleichenden Fluidleitung 5", aber nicht der zweiten, druckabbauenden Fluidleitung 7".

Die erste Fluidleitung 5" ist zum Druckausgleich zwischen der Atmosphäre 1a und dem Inneren 1b des Batteriegehäuses 23 im Normalbetrieb dauerhaft geöffnet und ist und nur durch thermische Beaufschlagung verschließbar. Dies erfolgt, indem die intumeszierende Dichtung 12" die Isolierschicht 38 und das Deckgewebe 39 verdrängt oder im Brandfall deren Volumen einnimmt, wenn die Isolierschicht 38 und das Deckgewebe 39 verbrannt sind. Selbstverständlich ist auch denkbar, dass die Poren des offenporigen Deckgewebes 39 sowie der offenporigen Isolierschicht 38 durch die intumeszierende Dichtung 12" lediglich verschlossen werden, ohne dass diese Lagen verbrennen.

Die zweite Fluidleitung 7" ist zum Druckabbau durch einen definierten Überdruck innerhalb des Batteriegehäuses 23 relativ zum Atmosphärendruck sowohl druckgesteuert öffenbar als auch thermisch verschließbar. Das zweite Teilventil 6" weist ebenfalls die intumeszierende Dichtung 12" auf, welche gemeinsam mit der Isolierschicht 38 und dem Deckgewebe 39 durch eine Feder 13 mit Druck beaufschlagbar ist, um eine zumindest teilweise Absperrung der Fluidleitung 7" herzustellen. Insoweit ist der Verbund 40 unter Federkraft gegen eine Dichtfläche 15 pressbar. Dennoch findet ein geringer Fluidaustausch durch den Verbund 40 im Normalbetrieb statt.

Das zweite Teilventil 6" weist hierzu einen Ventilteller 16 auf, der durch die Feder 13 gegen eine Dichtfläche 15 pressbar ist. Die intumeszierende Dichtung 12" ist zwischen dem Ventilteller 16 und der Dichtfläche 15 angeordnet. Letztlich ist der gesamte Verbund 40 gegen die Dichtfläche 15 pressbar und von dieser gegen die Federkraft der Feder 13 abhebbar, um einen Druckausgleich herzustellen.

Die erste Fluidleitung 5" weist mehrere erste Entlüftungsöffnungen in Form von Poren in der Isolierschicht 38 sowie im Deckgewebe 39 auf und weist eine weitere Entlüftungsöffnung 17 im ersten Abschnitt 2" auf. Die weitere Entlüftungsöffnung 17 mündet in einen Raum 18, in dem eine Entlüftungsmembran und/ oder ein gesintertes PTFE-Element 19 angeordnet ist.

Die zweite Fluidleitung 7" umfasst im Wesentlichen kreisförmige Durchgänge oder Öffnungen in der Dichtfläche 15, die von der Dichtung 12" bzw. dem Verbund 40 abdeckbar sind, sowie die weitere Entlüftungsöffnung 17. Zum Druckabbau kann ein Fluid nach Freigabe der Durchgänge oder Öffnungen zunächst durch diese hindurchtreten und dann durch die weitere Entlüftungsöffnung 17 in den Raum 18 gelangen, in dem eine Entlüftungsmembran und/ oder ein gesintertes PTFE-Element 19 angeordnet ist. Im Brandfall verschließt die intumeszierende Dichtung 12" die Durchgänge oder Öffnungen in der Dichtfläche 15.

Der erste Abschnitt 2" und der zweite Abschnitt 3" des Gehäuses 1" sind durch ein Verschraubungselement 20 miteinander verschraubbar. Der zweite Abschnitt 3" ist unter Zwischenlage einer Gehäusedichtung 21" gegen einen Deckel 22 eines Batteriegehäuses 23 dichtend anlegbar.

Zwischen dem zweiten Abschnitt 3" und dem Deckel 22 eines Batteriegehäuses 23 ist eine zweite intumeszierende Dichtung 41 vorgesehen. Diese wird benötigt, um das Ventil zum Batteriegehäuse 23 anzudichten. Die zweite intumeszierende Dichtung 41 liegt radial innerhalb der Gehäusedichtung 21".

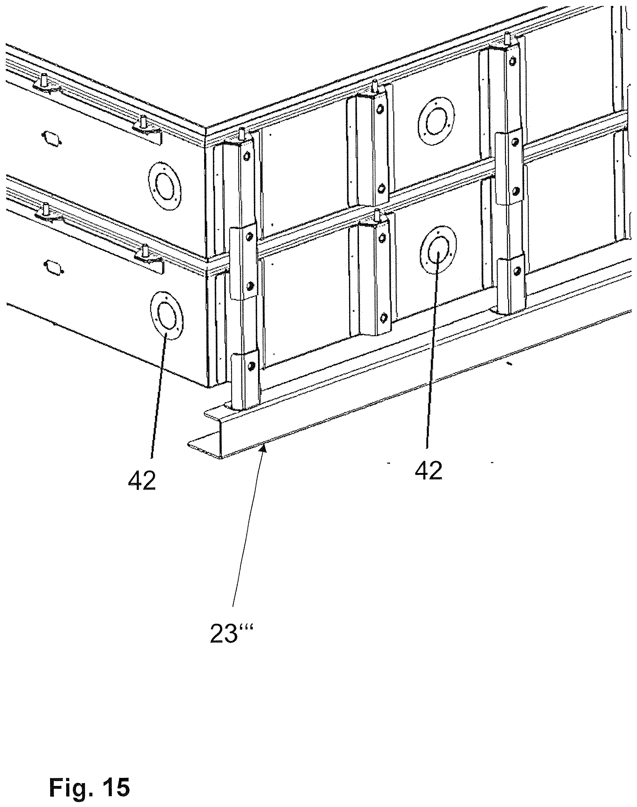

Fig. 15 zeigt eine perspektivische Teilansicht eines Batteriegehäuses 23"', in dem Ventile 42 des Stands der Technik verbaut sind, wobei jedes Ventil 42 eine nicht hochtemperaturbeständige metallische Einfassung und eine aufgeklebte Druckausgleichsmembran umfasst.

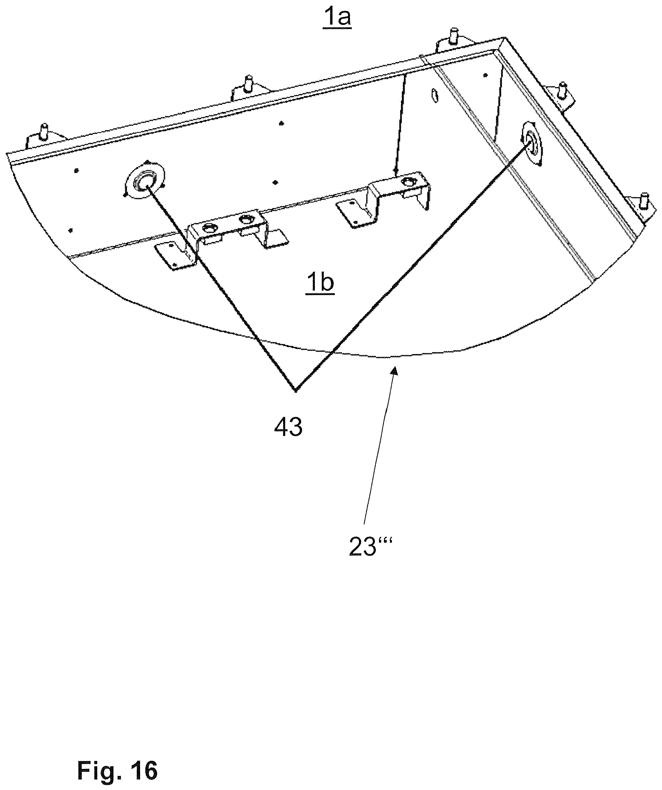

Fig. 16 zeigt eine perspektivische Teilansicht des Batteriegehäuses 23'" gemäß Fig. 15 von innen, wobei in oder an den Außenwandungen des Batteriegehäuses 23'" ein Ventil verbaut ist, welches eine intumeszierende Dichtung 12'" aufweist, um eine Fluidleitung bei Temperaturanstieg oder im Brand- oder Havariefall abzusperren. Konkret weist das Ventil eine perforierte Metallfolie 43 auf, die dem Inneren 1b des Batteriegehäuses 23'" zugewandt ist.

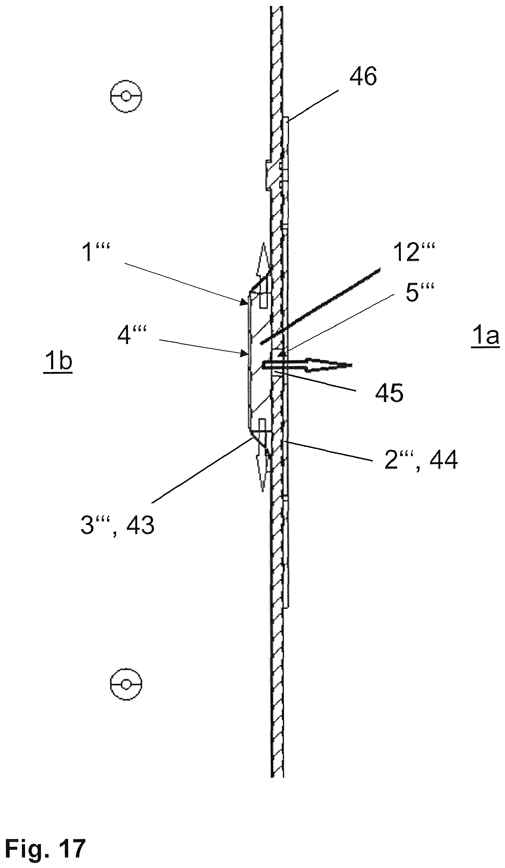

Fig. 17 zeigt eine Schnittansicht des Ventils gemäß Fig. 16, welches an oder in einer Außenwandung des Batteriegehäuses 23'" verbaut ist und die intumeszierende Dichtung 12'" und die perforierte Metallfolie 43 aufweist, welche dem Inneren 1b des Batteriegehäuses 23'" zugewandt ist.

Die perforierte Metallfolie 43 ist konkret als Edelstahlfolie ausgebildet. Die Metallfolie 43 weist Perforationen oder Poren auf, durch die ein Gas hindurchströmen kann. Die Metallfolie 43 ist punktgeschweißt. Die Metallfolie 43 ist topf- oder napfartig ausgebildet, um die intumeszierende Dichtung 12'" zwischen sich und der Außenwandung aufzunehmen.

Konkret zeigt Fig. 17 insoweit ein Ventil zum Druckausgleich und/ oder Drucküberlastabbau für das Batteriegehäuse 23"', umfassend ein Gehäuse 1'" mit einem der Atmosphäre 1a zuwendbaren ersten Abschnitt 2"', der eine Druckausgleichsmembran 44 aufweist, und einem dem Inneren 1b des Batteriegehäuses 23'" zuwendbaren zweiten Abschnitt 3'", der die perforierte Metallfolie 43 aufweist.

Die der Atmosphäre zugewandte Druckausgleichsmembran 44 ist gasdurchlässig, aber nicht flüssigkeitsdurchlässig. Die Druckausgleichsmembran 44 ist nach Art eines Gewebes ausgebildet. Die Druckausgleichsmembran 44 wird von einer Einfassung 46 umgeben und gehalten oder gesichert. Die Druckausgleichsmembran 44 ist bevorzugt aufgeklebt.

Die beiden Abschnitte 2"', 3'" des Ventils sind absperrbar fluidleitend miteinander verbunden. Das Gehäuse 1"' wird insoweit durch zwei Abschnitte 2"', 3'" gebildet, die auf unterschiedlichen Seiten der Außenwandung liegen und durch diese getrennt sind.

Es ist mindestens ein Teilventil 4'" vorgesehen, welches thermisch aktivierbar ist, um eine druckausgleichende und/ oder druckabbauende Fluidleitung 5'" zwischen dem ersten Abschnitt 2'" und dem zweiten Abschnitt 3'" abzusperren und/ oder durch die intumeszierende Dichtung 12'" zu verschließen.

Im Fall eines Temperaturanstiegs oder im Brand- oder Havariefall verschließt die intumeszierende Dichtung 12'" die Perforationen oder Poren der perforierten Metallfolie 43, so dass kein Gas mehr vom Inneren 1b durch ein Loch 45 in der Außenwandung in die Atmosphäre 1a gelangen kann. Die Fluidleitung 5'" ist somit verschlossen.

In Fig. 17 ist anhand von vertikalen Pfeilen dargestellt, wie sich die intumeszierende Dichtung 12'" im Brandfall ausdehnt. Hohlräume in der napfartigen Metallfolie 43 werden verschlossen, und das Loch 45 in der Außenwandung wird ebenfalls verschlossen. Gas, das vor dem Brandfall noch durch die Perforationen der Metallfolie 43 gelangen und die intumeszierende Dichtung 12'" umströmen konnte, um zum Loch 45 und von dort durch die Druckausgleichsmembran 44 in die Atmosphäre 1a zu gelangen, wird nun zurückgehalten.

Die druckausgleichende Fluidleitung 5'" weist Entlüftungsöffnungen im ersten Abschnitt 2'", nämlich in Form von Poren in der Druckausgleichsmembran 44, und weitere Entlüftungsöffnungen im zweiten Abschnitt 3'", nämlich Form von Perforierungen in der Metallfolie 43, auf. Die jeweiligen Entlüftungsöffnungen sind jeweils dem Inneren 1b des Batteriegehäuses 23'" bzw. der Atmosphäre 1a fluidleitend zugewandt.

Die Fluidleitung 5'" ist als erste Fluidleitung 5'" zum Druckausgleich zwischen der Atmosphäre 1a und dem Inneren 1b des Batteriegehäuses 23'" geöffnet und nur durch thermische Beaufschlagung verschließbar.

Eine zweite Fluidleitung 7'" zum Druckabbau durch einen definierten Überdruck innerhalb des Batteriegehäuses 23'" relativ zum Atmosphärendruck ist druckgesteuert öffenbar.

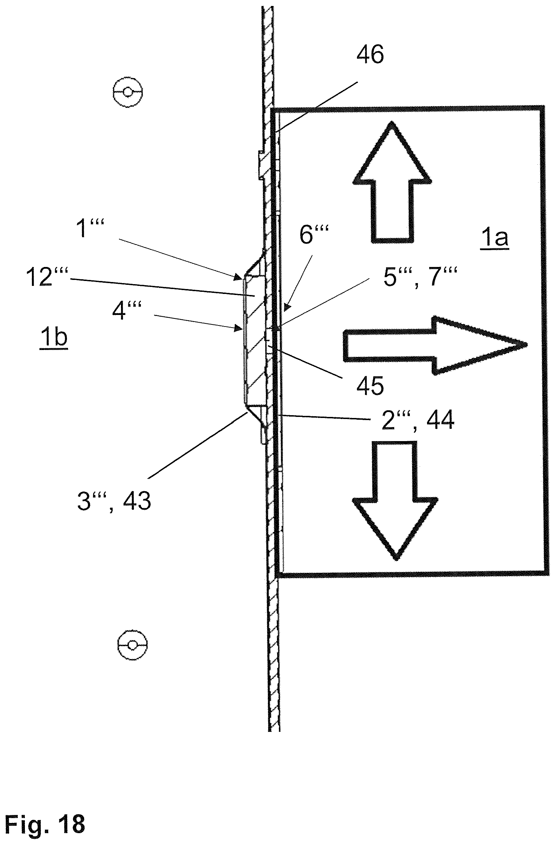

Fig. 18 zeigt dies anhand einer schematischen Ansicht des Druckabbaus im Fall eines Temperaturanstiegs oder im Brand- oder Havariefall kann bzw. können die perforierte Metallfolie 43 und/ oder die Druckausgleichsmembran 44 als Berstscheibe bzw. Berstscheiben ausgestaltet sein und als schwächste Stelle bzw. Stellen des Batteriegehäuses 23'" nachgeben. An dieser Stelle bzw. an diesen Stellen könnten Abluftkanäle installiert sein.

Das Loch 45 in der Außenwandung, das Teil der ersten Fluidleitung 5'" ist, wird im Fall des Druckabbaus auch Teil der zweiten Fluidleitung 7"'. Insoweit ist im Ventil auch ein zweites Teilventil 6'" vorgesehen, welches einen Druckabbau bei hohen Drücken erlaubt.

### Bezugszeichenliste

- 1, 1', 1", 1'": Gehäuse
- 1a: Atmosphäre
- 1b: Inneres von 23
- 2, 2', 2", 2'": erster Abschnitt von 1, 1', 1", 1'"
- 3, 3', 3", 3'": zweiter Abschnitt von 1, 1', 1", 1'"
- 4, 4", 4'": erstes Teilventil
- 5, 5", 5'": erste oder druckausgleichende Fluidleitung von 1, 1", 1'"
- 6, 6', 6", 6'": zweites Teilventil
- 7, 7', 7", 7"': zweite oder druckabbauende Fluidleitung von 1, 1", 1"'
- 7a: Durchgänge in 1
- 8: Kugel
- 9: erste oder der Kugel zugeordnete Feder
- 10: Anschlag
- 11: Entlüftungsöffnung
- 12, 12', 12", 12'": intumeszierende Dichtung
- 13: zweite Feder
- 14: Dichtung
- 15, 15': Dichtfläche
- 16: Ventilteller
- 17: weitere Entlüftungsöffnung
- 18: Raum
- 19: PTFE-Element
- 20: Verschraubungselement
- 21, 21', 21": Gehäusedichtung
- 22: Deckel von 23
- 23, 23"': Batteriegehäuse
- 24: Gewinde
- 25: Tellerfeder
- 26: IP-Dichtung
- 27: intumeszierende Schicht
- 28: intumeszierende perforierte Metallplatte
- 29: O-Ring
- 30: Dichtscheibe
- 31: Membran
- 32a, b: Kammer
- 33a: Kammerwand
- 34: Kabeldurchführung
- 35: Dichtkörper von 34
- 36: Kabel
- 37: Schicht aus oder mit intumeszierendem Material
- 38: Isolierschicht
- 39: Deckgewebe
- 40: Verbund
- 41: zweite intumeszierende Dichtung
- 42: Ventil des Stands der Technik
- 43: perforierte Metallfolie
- 44: Druckausgleichsmembran
- 45: Loch in der Außenwandung von 23'"
- 46: Einfassung

## Patentansprüche

1. Batteriegehäuse (23, 23"'), umfassend ein Ventil zum Druckausgleich und/oder Drucküberlastabbau, umfassend ein Gehäuse (1, 1', 1", 1"') mit einem der Atmosphäre (1a) zuwendbaren ersten Abschnitt (2, 2', 2", 2"') und einem dem Inneren (1b) des Batteriegehäuses (23, 23"') zuwendbaren zweiten Abschnitt (3, 3', 3", 3'"), wobei die beiden Abschnitte (2, 2', 2", 2'", 3, 3', 3", 3'") absperrbar fluidleitend miteinander verbunden sind,
**dadurch gekennzeichnet, dass** ein Teilventil (4, 4", 4'", 6, 6', 6") vorgesehen ist, welches thermisch aktivierbar ist, um eine druckausgleichende und/ oder druckabbauende Fluidleitung (5, 5", 5'", 7, 7', 7") zwischen dem ersten Abschnitt (2, 2', 2", 2'") und dem zweiten Abschnitt (3, 3', 3", 3'") abzusperren und/ oder durch eine intumeszierende Dichtung (12, 12', 12", 12'") zu verschließen, wobei ein erstes Teilventil (4, 4") vorgesehen ist, welches thermisch aktivierbar ist, um eine erste Fluidleitung (5, 5") zwischen dem ersten Abschnitt (2, 2") und dem zweiten Abschnitt (3, 3") abzusperren, und dass des Weiteren ein zweites Teilventil (6, 6") vorgesehen ist, welches thermisch aktivierbar ist, um eine zweite Fluidleitung (7, 7") zwischen dem ersten Abschnitt (2, 2") und dem zweiten Abschnitt (3, 3") abzusperren.

2. Batteriegehäuse nach Anspruch 1, **dadurch gekennzeichnet, dass** eine erste Fluidleitung (5, 5", 5'") zum Druckausgleich zwischen der Atmosphäre (1a) und dem Inneren (1b) des Batteriegehäuses (23, 23'") geöffnet ist und nur durch thermische Beaufschlagung verschließbar ist, wobei eine zweite Fluidleitung (7, 7", 7'") zum Druckabbau durch einen definierten Überdruck innerhalb des Batteriegehäuses (23, 23'") relativ zum Atmosphärendruck sowohl druckgesteuert öffenbar als auch thermisch verschließbar ist oder druckgesteuert öffenbar ist.

3. Batteriegehäuse nach einem der voranstehenden Ansprüche, **dadurch gekennzeichnet, dass** ein Teilventil (4) eine Kugel (8) aufweist, welche durch eine der Kugel (8) zugeordnete Feder (9) gegen einen Anschlag (10) pressbar ist, um eine Entlüftungsöffnung (11) einer Fluidleitung (5) zu verschließen.

4. Batteriegehäuse nach Anspruch 3, **dadurch gekennzeichnet, dass** die der Kugel (8) zugeordnete Feder (9) im geöffneten Zustand des Teilventils (4) vorgespannt ist und/ oder dass die der Kugel (8) zugeordnete Feder (9) durch eine Legierung mit niedriger Schmelztemperatur entspannbar oder freigebbar ist.

5. Batteriegehäuse nach einem der voranstehenden Ansprüche, **dadurch gekennzeichnet, dass** mindestens ein Teilventil (4", 6") einen Verbund (40) mit einer intumeszierenden Dichtung (12") aufweist, wobei mindestens eine Komponente oder Lage des Verbunds (40) fluiddurchlässig ist.

6. Batteriegehäuse nach Anspruch 5, **dadurch gekennzeichnet, dass** der Verbund (40) Teil der ersten, druckausgleichenden Fluidleitung (5") ist.

7. Batteriegehäuse nach einem der voranstehenden Ansprüche, **dadurch gekennzeichnet, dass** ein Teilventil (4", 6, 6', 6") eine intumeszierende Dichtung (12, 12', 12") aufweist, welche durch eine Feder (13, 25) mit Druck beaufschlagbar ist, um eine zumindest teilweise Absperrung einer Fluidleitung (7, 7', 7") herzustellen.

8. Batteriegehäuse nach Anspruch 7, **dadurch gekennzeichnet, dass** die intumeszierende Dichtung (12, 12") gegen eine Dichtung (14) pressbar ist und/ oder dass die intumeszierende Dichtung (12, 12', 12") gegen eine Dichtfläche (15, 15') pressbar ist.

9. Batteriegehäuse nach Anspruch 8, **dadurch gekennzeichnet, dass** die Dichtfläche (15) thermisch stabiler als die Dichtung (14) ist und/ oder dass die Dichtung (14) bei thermischer Belastung zeitlich vor der Dichtfläche (15) verbrennbar oder zerstörbar ist.

10. Batteriegehäuse nach einem der Ansprüche 7 bis 9, **dadurch gekennzeichnet, dass** das Teilventil (6, 6") einen Ventilteller (16) aufweist, der durch die Feder (13) gegen die Dichtung (14) und/ oder gegen die Dichtfläche (15) pressbar ist.

11. Batteriegehäuse nach Anspruch 10, **dadurch gekennzeichnet, dass** die intumeszierende Dichtung (12, 12") zwischen dem Ventilteller (16) und der Dichtung (14) und/ oder der Dichtfläche (15) angeordnet ist.

12. Batteriegehäuse nach einem der voranstehenden Ansprüche, **dadurch gekennzeichnet, dass** eine Fluidleitung (5, 5", 5''') eine Entlüftungsöffnung (11) im zweiten Abschnitt (3, 3", 3"') und eine weitere Entlüftungsöffnung (17) im ersten Abschnitt (2, 2", 2'") aufweist, wobei die jeweiligen Entlüftungsöffnungen (11, 17) jeweils dem Inneren (1b) des Batteriegehäuses (23, 23'") bzw. der Atmosphäre (1a) fluidleitend zugewandt sind.

13. Batteriegehäuse nach Anspruch 12, **dadurch gekennzeichnet, dass** die weitere Entlüftungsöffnung (17) in einen Raum (18) mündet, in dem eine Entlüftungsmembran und/ oder ein gesintertes PTFE-Element (19) angeordnet ist.

14. Batteriegehäuse nach einem der voranstehenden Ansprüche, **dadurch gekennzeichnet, dass** zwei Teile des Gehäuses (1, 1', 1") oder der erste Abschnitt (2, 2', 2") und der zweite Abschnitt (3, 3', 3") des Gehäuses (1, 1', 1") durch ein Verschraubungselement (20) miteinander verschraubbar sind.

15. Batteriegehäuse nach einem der voranstehenden Ansprüche, **dadurch gekennzeichnet, dass** ein Teil des Gehäuses (1, 1', 1") oder der zweite Abschnitt (3, 3") unter Zwischenlage einer Gehäusedichtung (21, 21', 21") und/oder einer weiteren intumeszierenden Dichtung (41) gegen einen Deckel (22) des Batteriegehäuses (23) dichtend anlegbar ist.

## Claims

1. Battery housing (23, 23"') comprising a valve for pressure equalization and/or pressure overload dissipation, which comprises a housing (1, 1', 1", 1"') having a first section (2, 2', 2", 2"'), which can be made to face the atmosphere (1a), and having a second section (3, 3', 3", 3"'), which can be made to face the interior (1b) of the battery housing (23, 23"'), wherein the two sections (2, 2', 2", 2'", 3, 3', 3", 3'") are in blockable fluid-conducting connection with one another, **characterized in that** a sub-valve (4, 4", 4'", 6, 6', 6") which can be activated thermally in order for a pressure-equalizing and/or pressure-dissipating fluid line (5, 5", 5'", 7, 7', 7") between the first section (2, 2', 2", 2'") and the second section (3, 3', 3", 3'") to be blocked and/or, by way of an intumescent seal (12, 12', 12", 12'"), closed off is provided, wherein a first sub-valve (4, 4") which can be activated thermally in order for a first fluid line (5, 5") between the first section (2, 2") and the second section (3, 3") to be blocked is provided, and **in that** a second sub-valve (6, 6") which can be activated thermally in order for a second fluid line (7, 7") between the first section (2, 2") and the second section (3, 3") to be blocked is furthermore provided.

2. Battery housing according to Claim 1, **characterized in that** a first fluid line (5, 5", 5'"), for pressure equalization between the atmosphere (1a) and the interior (1b) of the battery housing (23, 23"'), is open and can be closed off only by thermal loading, wherein a second fluid line (7, 7", 7"'), for pressure dissipation by a defined positive pressure within the battery housing (23, 23"') relative to the atmospheric pressure, can be both opened in a pressure-controlled manner and closed off thermally or can be opened in a pressure-controlled manner.

3. Battery housing according to either of the preceding claims, **characterized in that** one sub-valve (4) has a ball (8) which, by way of a spring (9) assigned to the ball (8), can be pressed against a stop (10) in order to close off a venting opening (11) of a fluid line (5).

4. Battery housing according to Claim 3, **characterized in that** the spring (9) assigned to the ball (8) is pretensioned in the open state of the sub-valve (4), and/or in that the spring (9) assigned to the ball (8) can be relieved of tension or released by way of an alloy with a low melting temperature.

5. Battery housing according to one of the preceding claims, **characterized in that** at least one sub-valve (4", 6") has a composite (40) with an intumescent seal (12"), wherein at least one component or layer of the composite (40) is permeable to fluid.

6. Battery housing according to Claim 5, **characterized in that** the composite (40) is part of the first, pressure-equalizing fluid line (5").

7. Battery housing according to one of the preceding claims, **characterized in that** one sub-valve (4", 6, 6', 6") has an intumescent seal (12, 12', 12") which, by way of a spring (13, 25), can be subjected to pressure in order for at least partial blockage of a fluid line (7, 7', 7") to be established.

8. Battery housing according to Claim 7, **characterized in that** the intumescent seal (12, 12") can be pressed against a seal (14), and/or **in that** the intumescent seal (12, 12', 12") can be pressed against a sealing surface (15, 15').

9. Battery housing according to Claim 8, **characterized in that** the sealing surface (15) is thermally more stable than the seal (14), and/or **in that**, under thermal loading, the seal (14) can be burned away or destroyed temporally before the sealing surface (15).

10. Battery housing according to one of Claims 7 to 9, **characterized in that** the sub-valve (6, 6") has a valve plate (16) which can be pressed against the seal (14) and/or against the sealing surface (15) by way of the spring (13).

11. Battery housing according to Claim 10, **characterized in that** the intumescent seal (12, 12") is arranged between the valve plate (16) and the seal (14) and/or the sealing surface (15).

12. Battery housing according to one of the preceding claims, **characterized in that** one fluid line (5, 5", 5"') has a venting opening (11) in the second section (3, 3", 3"') and a further venting opening (17) in the first section (2, 2", 2"'), wherein the respective venting openings (11, 17) in each case face the interior (1b) of the battery housing (23, 23"') or the atmosphere (1a) in a fluid-conducting manner.

13. Battery housing according to Claim 12, **characterized in that** the further opening (17) opens into a space (18) in which a venting diaphragm and/or a sintered PTFE element (19) are/is arranged.

14. Battery housing according to one of the preceding claims, **characterized in that** two parts of the housing (1, 1', 1") or the first section (2, 2', 2") and the second section (3, 3', 3") of the housing (1, 1', 1") can be screwed to one another by a screw-connection element (20) .

15. Battery housing according to one of the preceding claims, **characterized in that** one part of the housing (1, 1', 1") or the second section (3, 3"), with interposition of a housing seal (21, 21', 21") and/or a further intumescent seal (41), can be made to bear sealingly against a cover (22) of the battery housing (23).

## Revendications

1. Boîtier de batterie (23, 23'''), comprenant une soupape de compensation de pression et/ou de réduction de surpression, comprenant un boîtier (1, 1', 1", 1"') doté d'une première section (2, 2', 2'', 2''') pouvant être orientée vers l'atmosphère (1a) et d'une deuxième section (3, 3', 3'', 3''') pouvant être orientée vers l'intérieur (1b) du boîtier de batterie (23, 23'''), les deux sections (2, 2', 2", 2"', 3, 3', 3'', 3''') étant reliées l'une à l'autre en communication fluidique verrouillable,
**caractérisé en ce qu'**une soupape partielle (4, 4'', 4''', 6, 6', 6'') est prévue qui peut être activée thermiquement afin de verrouiller une conduite de fluide (5, 5'', 5''', 7, 7', 7'') de compensation de pression et/ou de réduction de pression entre la première section (2, 2', 2'', 2''') et la deuxième section (3, 3', 3'', 3'''), et/ou de la fermer par un joint d'étanchéité intumescent (12, 12', 12'', 12'''), dans lequel une première soupape partielle (4, 4'') est prévue qui peut être activée thermiquement afin de verrouiller une première conduite de fluide (5, 5'') entre la première (2, 2'') et la deuxième section (3, 3''), et **en ce qu'**en outre, une deuxième soupape partielle (6, 6'') est prévue qui peut être activée thermiquement afin de verrouiller une deuxième conduite de fluide (7, 7'') entre la première section (2, 2'') et la deuxième section (3, 3").

2. Boîtier de batterie selon la revendication 1, **caractérisé en ce qu'**une première conduite de fluide (5, 5'', 5''') de compensation de pression est ouverte entre l'atmosphère (1a) et l'intérieur (1b) du boîtier de batterie (23, 23''') et ne peut être fermée que par sollicitation thermique, une deuxième conduite de fluide (7, 7'', 7''') de réduction de pression pouvant être à la fois être ouverte par commande de pression et fermée thermiquement, ou pouvant être ouverte par commande de pression, par une surpression définie à l'intérieur du boîtier de batterie (23, 23''') par rapport à la pression atmosphérique.

3. Boîtier de batterie selon l'une quelconque des revendications précédentes, **caractérisé en ce qu'**une soupape partielle (4) présente une bille (8) qui peut être pressée contre une butée (10), par un ressort (9) associé à la bille (8), pour fermer un orifice de ventilation (11) d'une conduite de fluide (5).

4. Boîtier de batterie selon la revendication 3, **caractérisé en ce que** le ressort (9) associé à la bille (8) est précontraint à l'état ouvert de la soupape partielle (4), et/ou **en ce que** le ressort (9) associé à la bille (8) peut être détendu ou libéré par un alliage ayant une température de fusion basse.

5. Boîtier de batterie selon l'une quelconque des revendications précédentes, **caractérisé en ce qu'**au moins une soupape partielle (4'', 6'') présente un ensemble (40) doté d'un joint d'étanchéité intumescent (12''), au moins un composant ou une couche de l'ensemble (40) étant perméable aux fluides.

6. Boîtier de batterie selon la revendication 5, **caractérisé en ce que** l'ensemble (40) fait partie de la première conduite de fluide (5'') de compensation de pression.

7. Boîtier de batterie selon l'une quelconque des revendications précédentes, **caractérisé en ce qu'**une soupape partielle (4'', 6, 6', 6'') présente un joint d'étanchéité intumescent (12, 12', 12'') qui peut être sollicité par un ressort (13, 25) avec une pression afin d'établir un verrouillage au moins partiel d'une conduite de fluide (7, 7', 7'').

8. Boîtier de batterie selon la revendication 7, **caractérisé en ce que** le joint d'étanchéité intumescent (12, 12'') peut être pressé contre un joint d'étanchéité (14), et/ou **en ce que** le joint d'étanchéité intumescent (12, 12', 12'') peut être pressé contre une surface d'étanchéité (15, 15').

9. Boîtier de batterie selon la revendication 8, **caractérisé en ce que** la surface d'étanchéité (15) est thermiquement plus stable que le joint d'étanchéité (14), et/ou **en ce que** sous une contrainte thermique, le joint d'étanchéité (14) brûle plus vite ou est détruit plus vite que la surface d'étanchéité (15).

10. Boîtier de batterie selon l'une quelconque des revendications 7 à 9, **caractérisé en ce que** la soupape partielle (6, 6'') présente une tête de soupape (16) qui peut être pressée par le ressort (13) contre le joint d'étanchéité (14) et/ou contre la surface d'étanchéité (15).

11. Boîtier de batterie selon la revendication 10, **caractérisé en ce que** le joint d'étanchéité intumescent (12, 12'') est disposé entre la tête de soupape (16) et le joint d'étanchéité (14) et/ou la surface d'étanchéité (15).

12. Boîtier de batterie selon l'une quelconque des revendications précédentes, **caractérisé en ce qu'**une conduite de fluide (5, 5'', 5''') présente un orifice de ventilation (11) dans la deuxième section (3, 3'', 3''') et un autre orifice de ventilation (17) dans la première section (2, 2'', 2'''), les orifices de ventilation (11, 17) respectifs étant tournés en communication fluidique respectivement vers l'intérieur (1b) du boîtier de batterie (23, 23''') ou vers l'atmosphère (1a).

13. Boîtier de batterie selon la revendication 12, **caractérisé en ce que** l'autre orifice de ventilation (17) débouche sur un espace (18) dans lequel une membrane de ventilation et/ou un élément PTFE fritté (19) sont disposés.

14. Boîtier de batterie selon l'une quelconque des revendications précédentes, **caractérisé en ce que** deux parties du boîtier (1, 1', 1'') ou la première section (2, 2', 2'') et la deuxième section (3, 3', 3'') du boîtier (1, 1', 1'') peuvent être vissées l'une à l'autre par un élément de vissage (20).

15. Boîtier de batterie selon l'une quelconque des revendications précédentes, **caractérisé en ce qu'**une partie du boîtier (1, 1', 1'') ou la deuxième section (3, 3'') peut être appliquée de manière étanche contre un couvercle (22) du boîtier de batterie (23) avec interposition d'un joint d'étanchéité de boîtier (21, 21', 21'') et/ou d'un autre joint d'étanchéité intumescent (41).
